Europäisches Patentamt

European Patent Office

Office européen des brevets

(11) Publication number: 0 346 914 A2

# EUROPEAN PATENT APPLICATION

(21) Application number: 89110935.7

(51) Int. Cl.4: G06F 15/40

(22) Date of filing: 16.06.89

(30) Priority: 17.06.88 US 207875

(43) Date of publication of application:
20.12.89 Bulletin 89/51

(84) Designated Contracting States:
DE FR GB

(71) Applicant: Modular Computer Systems Inc.
Box 60 99 1650 West McNab Road
Fort Lauderdale Fl 33310(US)

(72) Inventor: Korty, Joseph A.
7009 NW 43rd Street
Coral Springs, Florida 33065(US)

(74) Representative: Vogl, Leo, Dipl.-Ing.
AEG Aktiengesellschaft Theodor-Stern-Kai 1
D-6000 Frankfurt am Main 70(DE)

(54) A mostly contiguous file allocation technique.

(57) A method for selecting the sizes and the order-
ing of the extents used to construct a file, a seg-
ment, or a virtual space of a computer system (file).
The general method is defined to be any function,
applied to this purpose, that, in general, attaches
larger extents to the larger file addresses, and for
which the selection of extent sizes is determined
only by the address an extent is to reside at in the
file, plus any tuning parameters.

The method results in files which are mostly
contiguous, and that stay mostly contiguous, ir-
respective of any growth or shrinkage the file may
be subjected to during its lifetime. High contiguity
improves performance by permitting a compact file
representation, and, for disc files, improves perfor-
mance by permitting larger blocks of data to be
moved to or from the disc device, and by minimizing
head seeks.

The repeat factor, along with the doubling of
extent size each time the repeat factor expires, is an
important innovation that greatly reduces the internal
and external fragmentation normally associated with
extent based systems.

SOME FILE

SOME STORAGE
DEVICE

EP 0 346 914 A2

## A Mostly Contiguous File Allocation Technique

### Background of the Invention

A file system is that component of the operating system of a computer that breaks up the available storage area of some device (disk) into an arbitrary number of files, each of which appears, to its users; as if it were a contiguous storage device in its own right. However, such contiguity within a file is usually an illusion. Files are usually build up out of a series of smaller contiguous regions, called extents. To implement an illusion of contiguity, the file system maps any address given to it with respect to a file (file address) into the appropriate physical address on the disk where that part of the file actually resides.

Current art provides a wide variety of such mapping functions, also called file representation methods, most of which fall into two categories. The first, called extent list file representation, maintains a simple array, or a chain of such arrays, for each file. Each array element identifies the location and size of some extent on the disk. The range of file addresses that map to this extent is offset from the start of the file by the sizes of all the extents that are listed before it in the extent list. For example, consider a file having three extents: the first extent being one block long, the second four blocks long, and the last two blocks long, that a block is some atomic unit of disk storage space, say, 1000 bytes, and that file address 0 points to the first byte of the file. Then file addresses 0-999 map to the disk locations pointed to by the first extent of the file, file addresses 1000-4999 map to the disk locations pointed to by the second extent of the file, and file addresses 5000-6999 map to the disk locations pointed to by the third extent of the file.

Extent tree file representation, the second category of file representation methods, typically uses only a single extent size, say, one block. The enormous number of extents that results for large files is then managed by arranging them into some form of a tree structure. For example, in the popular UNIX(tm) operating system, a 13 element array is used as the root structure. The first ten elements of the array point to the first ten blocks of the file. The eleventh element points to a block which in turn contains pointers to the next 256 blocks in the file. The eleventh element is called, in UNIX terminology, a single level indirection pointer.

The twelfth element of the root array provides second level indirection. It points to a block, which in turn has pointers to 256 other blocks, each of which has pointers to a set of 256 data blocks of the file. Thus second level indirection maps up to $256^2 = 65536$ data blocks into the file. This idea extends to the thirteenth root array element, which provides third level indirection, or access to an additional $256^3$ blocks, which is more than what can be supplied by today's disk technology.

A number of serious performance problems are known to occur with the extent tree file representation method. Random access into a medium or large scale file results in multiple I/O operations for each data block referenced, one for each pointer block that must be accessed to get at a data block. Another performance problem occurs when the potentially very low contiguity that is possible in such files is approached in practice. The extra head seeks necessary to sequentially access highly discontiguous files has been shown to slow down data transfers to and from a file upto a factor of six. In addition, opportunities to do multiblock transfers, thus also minimizing rotational latency as a performance degradation factor, occur less often with the extent tree file representation method. In fact, such contiguities are undependable to the point that no extent tree based implementation known to the author has taken advantage of them when they do occur.

The extent list file representation method has a different set of problems. All of them center on the fact that there has been no really effective way to select the sizes of the extents which are to go into a file. Typically, when a file is created, it is not obvious (to the file system at least) how much data will be written to it before it is closed. If the file system chooses a large size for the extents to be appended to the file, and only a little information is written out to the file, then a large amount of unused space is attached to the file which could be better used elsewhere (internal fragmentation). If, on the other hand, a small extent size is chosen and a large amount of data is written out, then the file is potentially highly discontiguous, and the resulting large number of extents will not even have the efficiencies of a tree structure to keep them organized. For those files which are created manually and whose final size is approximately known, one method to minimize the tradeoff is provide an initial size and an extent increment size parameter to the user at the time those files are created.

For automatically created files, and for user created files whose final size can not easily be guessed, the typical system will default the initial size to zero and selects a large extent increment size, usually one track, and simply accepts the high internal fragmentation that results as simply unavoidable. A variation on the above method, such as freeing up the excess space in a file when it is closed, promotes the creation of small, relatively unusuable extents on the disk (external fragmentation), whose magnitude is approximately equal to the internal fragmentation it replaces. When the external fragmentation is in turn minimized by permitting the (manual or automatically made) extent requests to be automatically broken up into a series of smaller extents as required, then the contiguity within a file becomes unpredictable, and often approaches the worst case, namely one block per extent.

## Summary of the Invention

The present invention is directed to an improvement of the extent list file representation method and to provide a high and easily predictable contiguity for all files, without recourse to user tuning of each file, without regard to the file size, and without regard to any size change a file may be subjected to during its lifetime. In addition, the method avoids the high fragmentation contiguity traditionally triggers in extent list based systems.

In accordance with the invention a method for selecting the size and ordering of the extents of a file is provided wherein the size of an extent starting at a certain file address is a nondecreasing function of said file address and wherein all extents of the same size are adjacent to each other.

## Brief Description of the Drawing

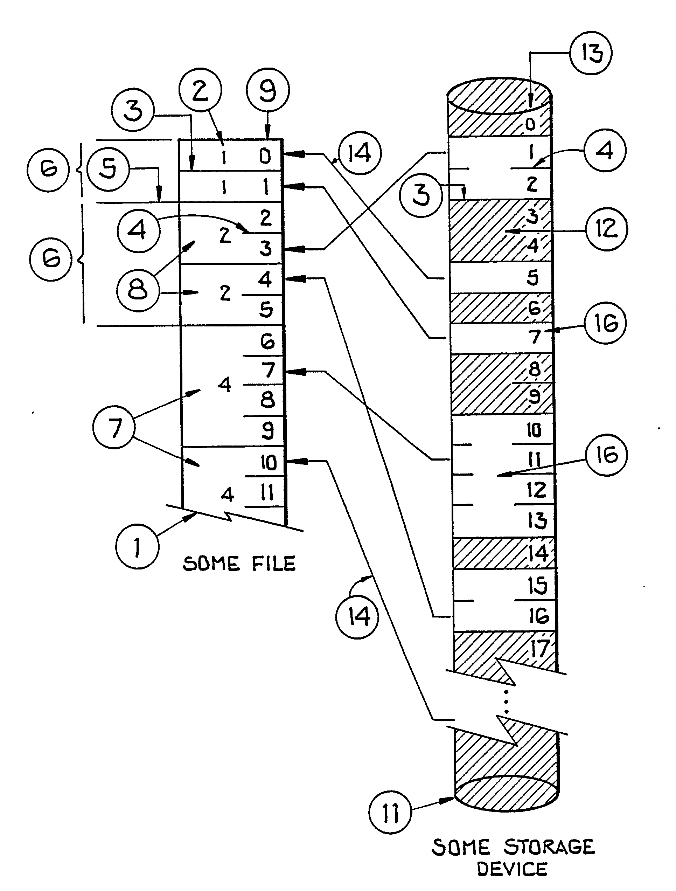

Figure 1 shows extents from some disk device being used to construct a file according to the invention.

## Detailed Description of the Preferred Embodiment

Figure 1 illustrates an embodiment of the function used to select the sizes and the order of the extents (16) of some disk device (11), or other storage area, as they are to appear in some file (1). The boundaries of the extents are marked by long, horizontal lines (3, 5); the short tic marcs (4) mark off the block boundaries within an extent. Each extent size that is of interest is also numerically identified (2, 7, 8). For purposes of illustration, block addresses, both with respect to a file (9), and with respect to the storage device (13), are also given. The unused portions of the disk device (12) are shaded, in order to easily distinguish them from the used portions. The arrows (14) show the mapping of the extents into the address space of a file by the underlying file representational method.

Whereas the present invention is directed to the method of selecting and ordering the sizes of the extents of files, it is compatible with every file representation method that implements the illusion of contiguity, be it extent trees, extent list, or some other as yet unknown representation. According to the invention for small files, small extents must be appended if internal fragmentation is to be kept down, but for larger files, larger extents may be appended without adversely effecting the internal fragmentation.

All embodiments of the invention group the extents of a file into levels (6), where a level is defined to be all adjacent extents of the same size. The boundaries between levels is visually reinforced in Figure 1 by horizontal lines (5) longer than the lines that mark normal extent boundaries (3).

The number of extents that appear within a level is called that level's repeat factor. In the preferred embodiment, the repeat factor is the same for all levels. In figure 1 the repeat factor is two; however repeat factors of four or five are in practice much more effective in reducing the internal and external fragmentation of the method, while maintaining high contiguity.

The method requires that extents residing in levels at higher file addresses (7), be larger than the extents in levels occupying lower file addresses (8). In the preferred embodiment, the extents in adjacent levels differ in size by a factor of two. This rapid growth in extent size means that the number of extents in a file is roughly proportional to the logarithm of the file's current size, that is, it remains mostly contiguous. The application of a repeat factor is a key development that mitigates the effects this rapid growth would otherwise have on the internal and external fragmentation of the file system.

Although this invention has been described almost exclusively in terms of disk files, it can be applied productively to a variety of other memory management problems. For example, the method could provide an especially effective and compact way of implementing varying-length segments in the hardware of a computer with a segmented architecture. For computers which do not implement segments, but instead support in hardware a virtual space concept for each executing process, a part of the virtual space mechanism could in many cases be efficiently implemented by this method.

## Claims

1. A method for selecting the sizes and ordering of the extents of a file wherein the size of an extent starting at a certain file address is a nondecreasing function only of said file address and wherein all extents of the same size are adjacent to each other.

2. A method as described in claim 1, wherein for each pair of adjacent extents with different sizes, the larger extent is double the size of the smaller.

3. A method as described in claim 1, wherein for each pair of adjacent extents with different sizes, the larger extent is some constant multiple of the size of the smaller.

4. A method as described in claim 1, wherein for each pair of adjacent extents with different sizes, the larger extent is larger by a constant amount.

5. A method as described in claim 1, wherein for a sequence of unique extent sizes selected by said method, said sizes are based on some form of the Fibonacci sequence of numbers.

6. A method as described in claim 1, wherein the number of adjacent extents which have the same size is some constant greater than or equal to two.

7. A method as described in claim 1, wherein the number of adjacent extents of the same size, called the repeat factor, is a nondecreasing function of the file address.

8. A method as described in claim 7, wherein the series of said repeat factors internally used by said function form an ascending sequence, such that any two adjacent repeat factors differ by a constant amount.

9. A method as described in claim 7, wherein the series of said repeat factors internally used by said function form an ascending sequence, such that the ratio of any two adjacent repeat factors is some constant greater than 1.0.

10. A method as described in claim 7, wherein the series of repeat factors internally used by said function form an ascending sequence based on some version of the Fibanacci sequence of numbers.

11. A method as described in claim 7, wherein the series of said repeat factors internally used by said function has a finite number of members, and that the final member, in order to accomodate arbitrarily large files, has an effective value of infinity.

SOME FILE

SOME STORAGE
DEVICE